(19) Europäisches Patentamt
European Patent Office
Office européen des brevets

(11) **EP 3 218 632 B1**

(12) **EUROPEAN PATENT SPECIFICATION**

(45) Date of publication and mention
of the grant of the patent:
**06.05.2020 Bulletin 2020/19**

(51) Int Cl.:
*F16L 55/027* (2006.01)    *F16L 55/04* (2006.01)
*F04B 39/00* (2006.01)

(21) Application number: **15790957.3**

(86) International application number:
**PCT/EP2015/075959**

(22) Date of filing: **06.11.2015**

(87) International publication number:
**WO 2016/075048 (19.05.2016 Gazette 2016/20)**

(54) **APPARATUS WITH DEVICE FOR DAMPENING PRESSURE PULSATIONS IN A GAS FLOW**

GERÄT MIT VORRICHTUNG ZUM DÄMPFEN VON DRUCKPULSATIONEN IN EINEM GASSTROM

APPAREIL AVEC DISPOSITIF POUR AMORTIR LES PULSATIONS DE PRESSION DANS UN FLUX DE GAZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2014 IT MI20141935**

(43) Date of publication of application:
**20.09.2017 Bulletin 2017/38**

(73) Proprietor: **Nuovo Pignone S.r.l.**
**50127 Florence (IT)**

(72) Inventors:
• **PATIL, Jayesh Nivrutti**
**Bangalore**
**Karnataka 560066 (IN)**
• **ZAGLI, Fabrizio**
**50127 Florence (IT)**
• **PASSERI, Marco Mark**
**50127 Florence (IT)**
• **RANFAGNI, Luciano**
**50127 Florence (IT)**

(74) Representative: **BRP Renaud & Partner mbB**
**Rechtsanwälte Patentanwälte**
**Steuerberater et al**
**Königstraße 28**
**70173 Stuttgart (DE)**

(56) References cited:
WO-A2-2012/135555    DE-A1- 2 107 911
SU-A1- 1 435 884    US-A- 2 795 374
US-A1- 2009 022 602

## Description

The present invention relates to an apparatus according to the preamble of claim 1. These arrangements can be commonly seen in natural gas compressing stations, hydrocarbon refineries, extraction wells and other.

Such an apparatus is known from US 2009/0022602 A.

As it is known in the art, when a reciprocating compressor is used to move a gas, pressure oscillation can be expected due to the reciprocating motion of the piston inside the cylinder. These oscillations have to be dampened, otherwise serious damage can result either upstream or downstream of the compressor.

In the art, a device for dampening pressure pulsations in a gas flow comprises a vessel, also known in the technical field as "empty volume bottle", which is placed upstream and downstream each compression stage, so that the gas has to transit inside it prior to enter/outlet in the plant piping. This already allows to dampen pressure pulsations for large range of frequencies and is effective in all the cases but it may require very large volume, difficult to be fit in the system, to comply with the pressure pulsations requirements. When the operating conditions allow it the dampening device have to be tuned to the desired frequencies and in such case several elements can be added inside the vessel. A few of these known elements can be deviator, baffles or choke tubes.

Disadvantageously, these can be expected to fail some time during the operating life of the device. If these elements break off from the vessel they can follow the gas flow (suction side) and damage the compressor or equipment downstream of the device (discharge side). In case of failure, being pressure vessels (i.e. subjected to several re-certification tests) a long time is necessary to restore it with consequent stop of the plant.

### SUMMARY

A first embodiment of the invention relates to an apparatus according to claim 1.

Advantageously, since the choke tube is placed outside, it cannot follow the flow of gas in the event of accidental damage. Moreover, since the tube is outside the pressure vessel equipment it can be properly supported as the rest of the piping, such event is less likely to happen.

Also, since the choke tube is placed outside the pressure vessel it can be easily replaced. This is also useful if, for example, the compressor operating conditions are modified later the manufacturing of the volume since the external choke makes it possible to "tune" again the device for the new operating conditions and frequency, just by changing the choke tube length or internal diameter.

Further details and specific embodiments will refer to the attached drawings, in which:

Figure 1 is a schematic view of a device for dampening pressure pulsations in a gas flow included in a first embodiment of the present invention;

Figure 2 is a schematic view of a device for dampening pressure pulsations in a gas flow included in a second embodiment of the present invention;

Figure 3 is a schematic view of a device for dampening pressure pulsations in a gas flow included in a third embodiment of the present invention;

Figure 4 is a schematic view of a device for dampening pressure pulsations in a gas flow included in a fourth embodiment of the present invention; and

Figure 5 is a schematic representation of a plant configuration comprising the devices from Figures 1-4.

### DETAILED DESCRIPTION

The following description of exemplary embodiments refer to the accompanying drawings. The same reference numbers in different drawings identify the same or similar elements. The following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

Therefore, a device for dampening pressure pulsations in a gas flow will be described in detail with reference to the attached drawings, where it will be indicated with the number 1.

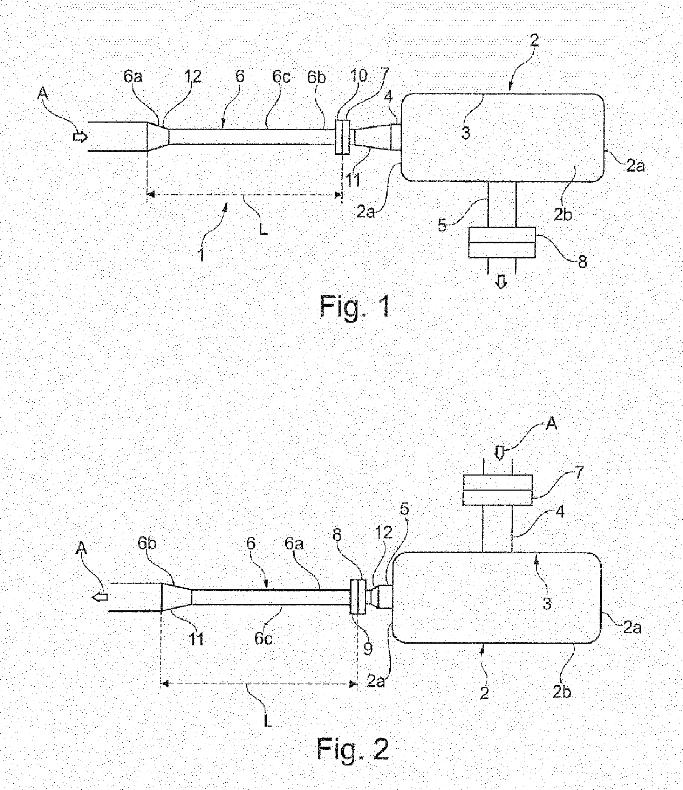

The device 1 comprises a vessel 2 in which the gas can transit. The vessel 2 defines an internal volume 3. According to the embodiments shown in figure 1-4 the vessel 2, and consequently the internal volume 3, are substantially cylindrical. With additional details, the vessel 2 is defined by a couple of base surfaces 2a, preferably circular, and by a cylindrical wall 2b extending between the base surfaces 2a. A transversal section of the vessel 2 is defined as a section on a plane substantially parallel to the base surfaces 2a. The transversal section is preferably constant along the length of the vessel 2.

With more detail, the vessel 2 has an inlet 4 and an outlet 5. Indeed, during normal functioning the gas transits through the vessel 2 from the inlet 4 to the outlet 5. This defines a flow direction "A" of the gas inside the device 1. In the embodiment of the invention shown in figure 1, the inlet 4 is preferably placed on a base surface 2a, while the outlet 5 is placed on the cylindrical wall 2b. In the embodiment of the invention shown in figure 2, the inlet 4 is preferably placed on the cylindrical wall 2b, while the outlet 5 is placed on one of the base surfaces 2a. In other embodiments, not shown in the drawings, the inlet 4 and the outlet 5 may be placed each on a respective base surface 2a, or they may be placed both on the cylindrical wall 2b, preferably opposite to each other. With more detail, the inlet is provided with a first flange 7. Similarly, the outlet 5 is provided with a second flange 8. The use of the first 7 and of the second flange 8 will be detailed in a following part of the present disclosure.

According to an alternative embodiment of the invention, not shown in the drawings, the vessel 2 and the internal volume 3 are spherical.

Preferably, a choke tube 6 is placed in fluid communication with the vessel 2. Such choke tube 2 is placed completely outside the internal volume 3 of the vessel 2.

More preferably, the choke tube 6 is straight. Advantageously, in this way the pressure drops along the choke tube 6 are minimized, so to facilitate complying with the API 618 approach 3 values. Also, in this way the present invention can be employed in more application which would otherwise need to resort to the prior art of using only an empty volume bottle. Additionally, the choke tube 6 has entry portion 6a and an exit portion 6b along the above mentioned flow direction "A".

The choke tube 6 has a central portion 6c between the entry 6a and the exit portion 6b. The intermediate portion 6c of the choke tube 6 has a constant cross-section. In other words, the diameter of the intermediate portion 6c is fixed. In the context of the present disclosure, the diameter of the choke tube 6 is defined as the diameter of the fixed portion 6c.

Preferably, the device 1 comprises a convergent portion 12 and a divergent portion 11 along the flow direction "A". In detail, the convergent portion 12 is placed before the central portion 6c of the choke tube 6. The divergent portion 11 is placed after the central portion 6c of the choke tube 6.

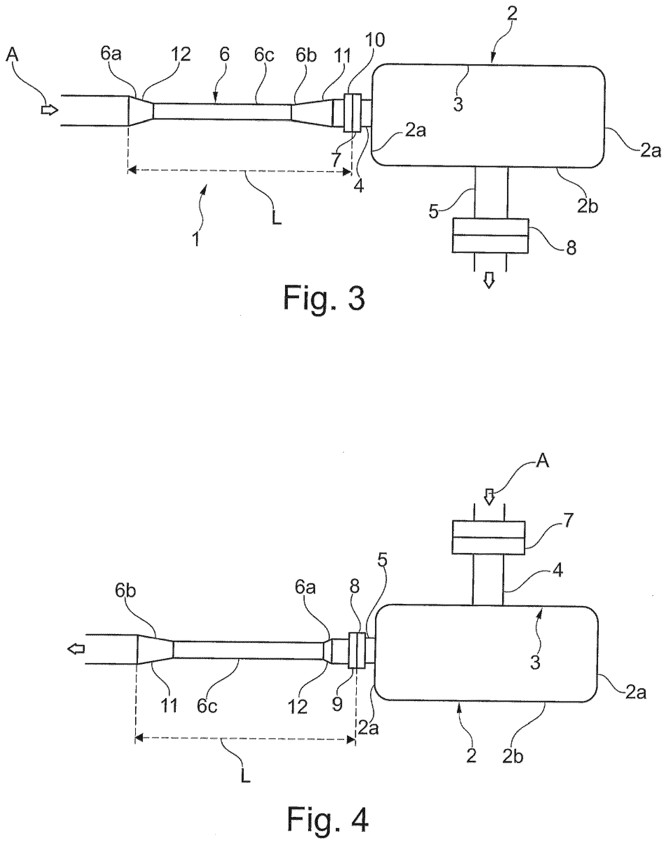

In the embodiments shown in figures 1 and 3, preferably employed on the suction side of a compressor stage, the convergent portion 12 is defined by the entry portion 6a of the choke tube 6. Specifically, in the embodiment shown in figure 1 the divergent portion 11 forms part of the inlet 4 of the vessel 2. Also, the exit portion 6b has a constant cross section, preferably equal to the cross-section of the central portion 6c.

However, in the embodiment shown in figure 3 the divergent portion 11 can be defined by the exit portion 6b.

Also, in the embodiments shown in figures 1 and 3 the walls of the convergent portion 12 have an inclination comprised between 20° and 40°, more preferably should be equal to 30°. Similarly, the divergent portion 11 has an inclination preferably comprised between 10° and 20°, more preferably equal to 14°.

In the embodiments of figure 2 and 4, preferably employed on the discharge side of a compressor stage, the divergent portion 11 is defined by the exit portion 6b of the choke tube 6. Specifically, in the embodiment shown in figure 2 the convergent portion 12 forms part of the outlet 5 of the vessel 2. Also, the entry portion 6a of the choke tube 6 has a constant cross section, preferably equal to the cross-section of the central portion 6c. However, in the embodiment shown in figure 4 the convergent portion 12 can be defined by the entry portion 6a.

In the embodiments shown in figures 2 and 4 the walls of the convergent portion 12 have an inclination comprised between 50° and 70°, more preferably should be equal to 60°. Similarly, the divergent portion 11 has an inclination preferably comprised between 10° and 30°, more preferably equal to 20°.

For joining with the vessel 2, the entry portion 6a may have a third flange 9. In this case, shown as part of the embodiments of figure 2 and 4, the third flange 9 is configured to mate with the second flange 8 of the vessel 2.

Similarly, the exit portion 6b may have a fourth flange 10. In this case, shown as part of the embodiment of figure 1 and 3, the fourth flange 10 is configured to mate with the first flange 7 of the vessel 2.

With additional detail, the length and the diameter of the choke tube 6 are determined as a predefined function of the reduction of the pressure pulsation at a chosen frequency, of the internal volume 3 and of the transversal section of the pipe upstream and/or downstream of the device 1. In particular, for the configuration of the device 1 according to le embodiments of the present invention it holds the following design relationship:

$$\frac{\Delta p_{out}}{\Delta p_{in}} = \frac{1}{\sqrt{\left[1 - \left(\frac{\omega}{\omega_r}\right)^2\right]^2 + \left(\omega \frac{V}{Sa}\right)^2}}$$

In the above equation, $\Delta p_{out}$ is the pressure pulsation of the gas exiting the device 1. Similarly, $\Delta p_{in}$ is the pressure pulsation of the gas entering the device 1. "V" is the volume inside of the vessel 2, i.e. the volume of the internal volume 3. "S" is the transversal section of the plant piping downstream of the device 1, while "a" is the speed of sound in the device 1. The parameter $\omega_r$ is defined as

$$\omega_r = a \sqrt{\frac{A}{LV}}$$

wherein A is the transverse section of the choke tube 6.

L is the length of the choke tube 6.

In order to size the choke tube 6, the parameter $\omega_r$ is extracted from the first relationship, since all the other parameters are either known or are design objectives. The second relationship can be used to extract the size of the choke tube 6. The process can be repeated as many times as it is necessary for the frequencies which the device 1 is designed to dampen. This results in many values of length and transverse section for the choke tube 6. A suitable compromise for the actual sizing of the choke tube 6 can then be found by averaging the results in any way known to the skilled technician. Furthermore, if the exact desired value of the diameter (which defines the transverse section A) of the choke tube 6 is not commercially available the above formulas can be used to verify if a similar sized and commercially available choke tube 6 can be acceptable.

The selected choke tube layout, to be applicable, should maintain its pressure drop within acceptable limits (e.g API 618 approach 3 pressure drop limits).

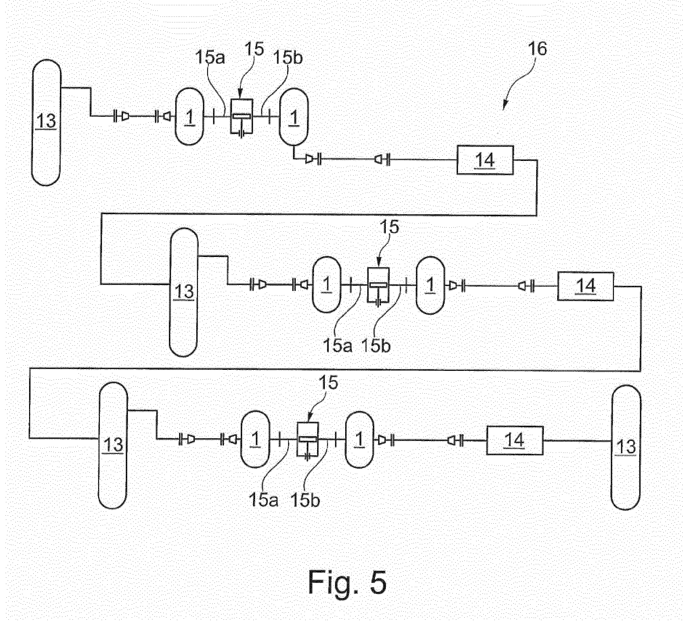

With reference to figure 5, another embodiment of the invention relates to an apparatus (or plant) 16 which comprises a reciprocating compressor. Such compressor comprises a plurality of stages 15. Each stage has a suction duct 15a and a discharge duct 15b for a gas flow. The stages 15 are placed in series to each other, meaning that the discharge duct of each stage is placed in fluid communication with the suction duct of the next stage. Optionally, an heat exchanger 14 can be placed between two consecutive stages. Also, a separator 13 (also called demister in the technical field) can be placed downstream of the heat exchanger 14. A device 1 for dampening pressure pulsations in a gas flow as described above can then be provided for each suction duct 15a and/or for each discharge duct 15b.

## Claims

1. An apparatus (16) comprising a reciprocating compressor comprising a plurality of stages (15), each stage having a suction duct (15a) and a discharge duct (15b) for a gas flow, the discharge duct (15b) of each stage (15) being in fluid communication with the suction duct (15a) of the next stage (15); each suction duct (15a) and each discharge duct (15b) being provided with a respective device (1) for dampening pressure pulsations in a gas flow; **characterised in that** each respective device (1) for dampening pressure pulsations in a gas flow comprises a vessel (2) defining an internal volume (3) for the transit of said gas, said vessel (2) having an inlet (4) and an outlet (5); a choke tube (6) in fluid communication with the vessel (2) and placed completely outside said internal volume (3) of said vessel (2).

2. The apparatus (16) according to claim 1, wherein said choke tube (6) has entry portion (6a) and an exit portion (6b), a flow direction (A) for the flow of the gas being defined from said entry portion (6a) to said exit portion (6b).

3. The apparatus (16) according to claim 2, wherein said entry portion (6a) is convergent along said flow direction (A).

4. The apparatus (16) according to claim 2, wherein said entry portion (6a) has a constant cross-section.

5. The apparatus (16) according to any one of the claims from 2 to 4, wherein said exit portion (6b) is divergent.

6. The apparatus (16) according to any one of the claims from 2 to 4, wherein said exit portion (6b) has a constant cross-section.

7. The apparatus (16) according to any one of the claims from 2 to 6, wherein said entry portion (6a) has a third flange (9), the outlet (5) of the vessel (2) having a second flange (8) for connecting with said third flange (9).

8. The apparatus (16) according to any one of the claims from 2 to 6, wherein said exit portion (6b) has a fourth flange (10), the inlet (5) of the vessel (2) having a first flange (7) for connecting with said fourth flange (10).

9. The apparatus (16) according to any one of the foregoing claims, wherein said choke tube (6) is straight.

10. The apparatus (16) according to any one of the foregoing claims, wherein said choke tube (6) has an intermediate portion (6c) having a constant cross-section.

11. The apparatus (16) according to any one of the foregoing claims, wherein the length and the diameter of said choke tube (6) are determined as a predefined function of the reduction of the pressure pulsation at a chosen frequency, the internal volume (3) and the transversal section (S) of a pipe on which the device (1) is designed to be installed.

## Patentansprüche

1. Gerät (16) umfassend einen Hubkolbenverdichter, der eine Vielzahl von Stufen (15) umfasst, wobei jede Stufe einen Ansaugkanal (15a) und einen Auslasskanal (15b) für einen Gasstrom aufweist, wobei der Auslasskanal (15b) jeder Stufe (15) in Fluidverbindung mit dem Ansaugkanal (15a) der nächsten Stufe (15) steht; wobei jeder Ansaugkanal (15a) und jeder Auslasskanal (15b) mit einer jeweiligen Vorrichtung (1) zum Dämpfen von Druckpulsationen in einem Gasstrom bereitgestellt wird; **dadurch gekennzeichnet, dass**

jede jeweilige Vorrichtung (1) zum Dämpfen von Druckpulsationen in einem Gasstrom einen Behälter (2) umfasst, der ein Innenvolumen (3) für den Durchgang des Gases definiert, wobei der Behälter (2) einen Einlass (4) und einen Auslass (5) aufweist; ein Drosselrohr (6) in Fluidverbindung mit dem Behälter (2) steht und komplett außerhalb des Innenvolumens (3) des Behälters (2) platziert ist.

2. Gerät (16) nach Anspruch 1, wobei das Drosselrohr (6) einen Eintrittsabschnitt (6a) und einen Austrittsabschnitt (6b) aufweist, wobei eine Durchflussrichtung (A) für die Strömung des Gases von dem Eintrittsabschnitt (6a) zu dem Austrittsabschnitt (6b) definiert ist.

3. Gerät (16) nach Anspruch 2, wobei der Eintrittsabschnitt (6a) entlang der Durchflussrichtung (A) konvergent ist.

4. Gerät (16) nach Anspruch 2, wobei der Eintrittsabschnitt (6a) einen konstanten Querschnitt aufweist.

5. Gerät (16) nach einem der Ansprüche 2 bis 4, wobei der Austrittsabschnitt (6b) divergent ist.

6. Gerät (16) nach einem der Ansprüche 2 bis 4, wobei der Austrittsabschnitt (6b) einen konstanten Querschnitt aufweist.

7. Gerät (16) nach einem der Ansprüche 2 bis 6, wobei der Eintrittsabschnitt (6a) einen dritten Flansch (9) aufweist, wobei der Auslass (5) des Behälters (2) einen zweiten Flansch (8) zum Verbinden mit dem dritten Flansch (9) aufweist.

8. Gerät (16) nach einem der Ansprüche 2 bis 6, wobei der Austrittsabschnitt (6b) einen vierten Flansch (10) aufweist, wobei der Einlass (5) des Behälters (2) einen ersten Flansch (7) zum Verbinden mit dem vierten Flansch (10) aufweist.

9. Gerät (16) nach einem der vorstehenden Ansprüche, wobei das Drosselrohr (6) gerade ist.

10. Gerät (16) nach einem der vorstehenden Ansprüche, wobei das Drosselrohr (6) einen Zwischenabschnitt (6c) mit einem konstanten Querschnitt aufweist.

11. Gerät (16) nach einem der vorstehenden Ansprüche, wobei die Länge und der Durchmesser des Drosselrohrs (6) als eine vorgegebene Funktion der Reduzierung der Druckpulsation bei einer ausgewählten Frequenz, dem Innenvolumen (3) und dem Querschnitt (S) eines Rohres bestimmt werden, auf dem die Vorrichtung (1) zum Einbau vorgesehen ist.

**Revendications**

1. Appareil (16) comprenant un compresseur alternatif comprenant une pluralité d'étages (15), chaque étage ayant un conduit d'aspiration (15a) et un conduit d'évacuation (15b) pour un flux de gaz, le conduit d'évacuation (15b) de chaque étage (15) étant en communication fluidique avec le conduit d'aspiration (15a) de l'étage suivant (15) ; chaque conduit d'aspiration (15a) et chaque conduit d'évacuation (15b) étant pourvu d'un dispositif respectif (1) pour amortir des pulsations de pression dans un flux de gaz ; **caractérisé en ce que** chaque dispositif respectif (1) pour amortir des pulsations de pression dans un flux de gaz comprend un récipient (2) définissant un volume interne (3) pour le transit dudit gaz, ledit récipient (2) ayant une entrée (4) et une sortie (5) ; un tube d'étranglement (6) en communication fluidique avec le récipient (2) et placé complètement à l'extérieur dudit volume interne (3) dudit récipient (2).

2. Appareil (16) selon la revendication 1, dans lequel ledit tube d'étranglement (6) a une partie d'entrée (6a) et une partie de sortie (6b), une direction de flux (A) pour le flux du gaz étant définie de ladite partie d'entrée (6a) à ladite partie de sortie (6b).

3. Appareil (16) selon la revendication 2, dans lequel ladite partie d'entrée (6a) est convergente le long de ladite direction de flux (A).

4. Appareil (16) selon la revendication 2, dans lequel ladite partie d'entrée (6a) a une section transversale constante.

5. Appareil (16) selon l'une quelconque des revendications 2 à 4, dans lequel ladite partie de sortie (6b) est divergente.

6. Appareil (16) selon l'une quelconque des revendications 2 à 4, dans lequel ladite partie de sortie (6b) a une section transversale constante.

7. Appareil (16) selon l'une quelconque des revendications 2 à 6, dans lequel ladite partie d'entrée (6a) a une troisième bride (9), la sortie (5) du récipient (2) ayant une deuxième bride (8) pour un raccordement avec ladite troisième bride (9).

8. Appareil (16) selon l'une quelconque des revendications 2 à 6, dans lequel ladite partie de sortie (6b) a une quatrième bride (10), l'entrée (5) du récipient (2) ayant une première bride (7) pour un raccordement avec ladite quatrième bride (10).

**9.** Appareil (16) selon l'une quelconque des revendications précédentes, dans lequel ledit tube d'étranglement (6) est droit.

**10.** Appareil (16) selon l'une quelconque des revendications précédentes, dans lequel ledit tube d'étranglement (6) a une partie intermédiaire (6c) ayant une section transversale constante.

**11.** Appareil (16) selon l'une quelconque des revendications précédentes, dans lequel la longueur et le diamètre dudit tube d'étranglement (6) sont déterminés comme une fonction prédéfinie de la réduction de la pulsation de pression à une fréquence choisie, du volume interne (3) et de la section transversale (S) d'un conduit sur lequel le dispositif (1) est conçu pour être installé.

EP 3 218 632 B1

Fig. 1

Fig. 2

## Fig. 3

## Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090022602 A